# EUROPEAN PATENT SPECIFICATION

(11) **EP 4 292 687 B1**
(45) Date of publication and mention of the grant of the patent: **20.08.2025**
(21) Application number: 23179275.5
(22) Date of filing: 14.06.2023
(51) Int. Cl.: B01D 11/04, B01F 27/114, F28D 7/02, B01F 35/90

(54) **DEVICE FOR MIXING TWO LIQUID PHASES AND CONTINUOUSLY OPERATING LIQUID-LIQUID EXTRACTION COLUMN COMPRISING THIS DEVICE.**
VORRICHTUNG ZUM MISCHEN ZWEIER FLÜSSIGER PHASEN UND KONTINUIERLICH ARBEITENDE FLÜSSIG-FLÜSSIG-EXTRAKTIONSKOLONNE MIT DIESER VORRICHTUNG.
DISPOSITIF DE MÉLANGE DE DEUX PHASES LIQUIDES ET COLONNE D'EXTRACTION LIQUIDE-LIQUIDE FONCTIONNANT EN CONTINU COMPRENANT CE DISPOSITIF.

(30) Priority: 16.06.2022 IT 202200012743
(43) Date of publication of application: 20.12.2023
(73) Proprietor: POLARIS Srl, 20900 Monza MB (IT)
(72) Inventor: MASETTO, Gian Claudio, 20900 Monza (MB) (IT)
(74) Representative: Premru, Rok

(56) References cited:
- WO-A1-2021/136796
- AU-A1- 2011 226 731
- CN-A- 106 139 639
- DE-A1- 2 322 872
- DE-C- 489 632
- GB-A- 615 425
- RU-C1- 2 647 029
- US-A- 3 013 866
- US-A- 3 049 413
- US-A- 3 254 048
- US-A- 5 248 485
- US-A- 5 713 216
- US-B2- 9 352 290

## Description

An apparatus a device for mixing two countercurrently contacted liquid phases, in particular two poorly miscible liquid phases, is described herein.

The mixing apparatus described herein enables to increase the surface of reciprocal contact between two countercurrent flowing liquid phases and can be used either as a static mixer or as a rotary mixer.

The mixing apparatus described herein is used in liquid-liquid extraction processes, particularly in liquid-liquid extraction processes with countercurrent flows and, even more particularly in liquid-liquid extraction processes which are carried out using continuously operating countercurrent flows extraction columns.

A continuously operating countercurrent flows liquid-liquid extraction column is also disclosed, which comprises this equipment adapted to mix two liquid phases.

A method for countercurrent mixing two liquid phases is also described.

Liquid-liquid extraction, also known by the acronym LLE (Liquid-Liquid Extraction), is a widely used mass transfer process that enables to selectively transfer a chemical compound C, the solute, from a liquid phase A known as the "feed" or "carrier" or "source phase", in which the compound C is dissolved, to another liquid phase B, known as the "solvent" or "extractant" or "extraction phase", wherein preferably the compound C is soluble.

The liquid phase B is chosen in such a way that reciprocal solubility with the liquid phase A is minimal, as far as possible, while the difference between their densities is significant.

The solute C is transferred from the liquid phase A to the liquid phase B through the surfaces of the two phases engaged in intimate contact with each other in a vessel, producing a dispersion to increase a reciprocal contact surface.

Such reciprocal intimate contact, which is helped by the dispersion of the phases, can be obtained by using a unique gravitational potential energy, if sufficient to achieve the extraction process objectives, as well as by associating it with the energy supplied by mechanical systems, until reaching an equilibrium between the two phases solute concentrations (extraction stage).

The phases, both modified in composition, provided there is still a residual difference in their densities, can subsequently be separated using a gravitational potential energy, alone or associated with devices that exploit a centrifugal force.

Following the solute transfer process from the carrier to the solvent, the source phase A transforms into a "raffinate", characterized by a lower solute concentration, and the extract phase B transforms into an "extract", characterized by the presence of the solute that has moved therein.

The transfer of the solute C from the surface of the liquid phase A, in which it is originally present, to the surface of the other liquid phase B, in which the solute C can be dissolved at a higher concentration, is in any case adjusted by the equilibrium between the chemicals potentials of the two resulting final phases, in favour of a lower free energy of the overall system.

The extent of this transfer depends on the value of the initial concentrations of the solute C in the liquid phase A - the higher as it can be - and of the solute C in the liquid phase B - the lower as it can be - at the moment of the reciprocal contact between the liquid phase A and the liquid phase B.

The resulting final distribution of the solute C in the two phases is adjusted by a partition coefficient, Kr, according to which, once the equilibrium is reached, the final concentrations' ratio in the two phases depends on the nature of the solvent used and on the temperature of the extraction process.

The higher the Kr value, the more effective the extraction.

The above considerations refer to the case where a single solute C is present within the carrier A but they can also be extended to the case where various solutes C1, C2, ..., Cn are present within the carrier A, characterized by different partition coefficients Kr1 , Kr2..... .Krₙ.

Various known process technologies exist for mixing the phases, for carrying out the extraction and for separating-the modified liquids with respect to the original composition, with the single or combined use of various forms of energy, in particular gravitational energy, mechanical energy, thermal energy.

Technologies which, in temporal succession, first mix the coupled phases and consecutively separate the two modified phases, first using mechanical energy and then gravitational energy, are known.

Other technologies carry out mixing and separation of the phases by using these energies simultaneously.

In order to carry out the process of transferring the solute between the two liquid phases and separating them continuously and simultaneously, equipment known as extraction columns can be used.

The extraction columns are typically metal containers, usually cylindrical containers which extend vertically, in which the two liquid phases, carrier phase A and extraction phase B, characterized by different densities and minimal reciprocal solubility, are introduced separately, from above the one having a greater density and vice versa, and let them flow continuously in countercurrent with a controlled flow rate depending on the process objectives.

Due to the effect of the gravitational energy, the higher density liquid phase flows downwards while the lower density phase flows upwards.

In this way, reciprocal direct contact is produced between the two interpenetrating phases, so as to increase the material exchange surface, which is continuously renewed, and progressively carry out the transfer of solute.

The efficiency of the transfer of the solute within an extraction column, other chemical-physical conditions being equal, depends on the extent and quality of the contact that can be achieved between the two liquid phases surfaces flowing through the column.

In order to increase the effective contact surface between the two phases the tendency of the two liquid phases, which are poorly miscible, must be overcome to maintain their structural integrity, favouring the preferential dispersion of one of the two phases in the other.

For this purpose, the column can be equipped, at various levels, with perforated discs arranged horizontally, integral with the cylindrical wall, producing a modest fragmentation and dispersion of the phases due to the action of contrasting the motion produced by the perforated discs, which is shown as a cutting action induced by the edge of the holes on the two contiguous liquids in reciprocal contact which are simultaneously passing through them in countercurrent.

As a more effective solution, it is known to introduce randomly arranged static fillings in the columns which have the function of increasing the reciprocal contact surface between the two liquid phases that flow within, counteracting their movement induced by gravity and modifying their trajectories, for the benefit of the quality of the extraction process.

These static fillings can consist of a set of small objects of various shapes, made of metal or ceramic or synthetic resin, in any case characterized by a large specific surface, which are introduced loose in the columns.

Alternatively, for the same purpose, it is possible to introduce into the columns structured fillings, generally of metal, consisting of large surface corrugated foils, which are assembled in an orderly manner, for example in parallel and arranged vertically or obliquely in the column.

It is advisable that the phase which preferentially wets the filling is introduced into the column first, so as to always be available for contact with the other phase, which is thus forced to deform and fragment by rubbing on the one present which prevents direct contact with the filling.

Upon contact with both types of fillings described, the first introduced phase preferably extends around their surface creating a sort of extremely thin liquid veil, due to the effect of the surface energy which favours the preferential adhesion of one of the phases, while the phase subsequently introduced rubs, exchanging solute, on the adhering phase, which in turn is continuously renewed.

Thus, the effective reciprocal contact surface between the phases is increased compared to that which would be produced by simply introducing the phases in the column, since the phase introduced subsequently is forced to deform and fragment by rubbing on the present phase which prevents the its direct contact with the filling.

By continuing to flow vertically within the columns thus arranged, the carrier phase and the extraction phase, urged by gravity, once left the contact with the loose or structured filling, are subject to being fragmented and dispersed in passing through the present empty spaces and in this way the reciprocal contact surface between the phases flowing inside continues to increase.

The phase continuously present in the column is also called the dispersing phase, while the more fragmented one is called the dispersed phase.

The two phases, flowing in countercurrent in reciprocal contact, direct or mediated by the solid fillings as described above, change composition continuously, progressively creating a reciprocal partition of the solute through a sequence of conditions of partial chemical-physical equilibrium (equilibrium stages), with the final outcome of achieving the most favourable equilibrium condition obtainable by the designed technology.

This process is called Multistage Counter Current Extraction (MCCE) and is carried out by using a unique gravitational potential energy to ensure these flows and the solute interphase passage.

While the operational volumetric capacity of the column depends on the crossing section available for the liquid phases, the efficiency of the extraction process is related to the quality of the reciprocal contact achieved, particularly to the achieved level of dispersion and reciprocal mixing, and to the time of permanence of the phases in the column (time made available for the solute exchange process), then to the column height.

In cases where the mechanical energy is also to be used to increase the contact interface and the material exchange between the two phases flowing in the vertical extraction columns, and hence the process efficiency, a valid solution is to adopt rotary mixers, usually made of metal, which crush, disperse and finely mix one phase into the other so as to increase the reciprocal contact surface between the two liquid phases flowing inside.

According to the most widespread prior art, such apparatuses comprise vertical rotating shafts which support, at various heights of the columns, one or more impellers of various shapes, for example small diameter horizontal discs equipped at the edges with vertical blades (disc turbines) which are adapted to crush and disperse one phase into the other by rotating at high speed, so as to increase the reciprocal contact surface and the interfacial turbulence between the phases, favouring the material exchange.

The areas in which the impellers rotate can be separated above and below by horizontal discs fixed to the edges of the column, which are equipped with a central hole having a diameter sufficient for the two liquid phases to partially pass around the shaft, and other small holes and even different conformations suitably distributed in the discs, so as to form distinct and separate stirring chambers and allow anyway the prosecution of the vertical countercurrent flow of the phases in the process.

These stirring devices are usually operated at high peripheral rotation speeds, even tens of m/s, depending on the conformation and sizes.

The energetic cutting action on the two liquids in contact carried out by the edges of the impeller blades creates a localized effect of crushing and micronization of the phases (cutting edge mixing) in order to achieve the formation of their emulsion which increases the reciprocal contact surface favouring the solute exchange.

The subsequent process of recomposition and separation of the original phases, which are modified with respect to the composition and respective volumes, is based on the tendency of the particles of the two dispersed phases of the emulsion, once the effect of the mechanical stress that produced them has ceased, to rejoin according to the respective chemical-physical affinities, for a coalescence effect leading to the formation of two separate phases, characterized by different densities and compositions from both each other and from the original phases.

In many instances, depending on the rheological characteristics of the phases in the process, the speed at which this cutting action is carried out may result excessive with the consequent formation of emulsions of microscopic droplets of the two liquids which are characterized by remarkable stability, that can only be solved by adopting suitable integrative support technologies to help the coalescence and the two-phase separation of the particles generated by the devices.

As a preventive remedy, however, a drastic reduction in the rotation speed leads to an equally drastic reduction in the efficiency of the overall extraction process.

Other preventive or corrective actions to avoid or to break the stable emulsions formed would consist in the addition of foreign chemical compounds to the phases, in the increase of the volumetric ratio between the phases, in the use of ultrafiltration media in which to flow the emulsions, in the centrifugation of the emulsified phases, etc., all actions which are not only heterogeneous with respect to the standard extraction process, but which would also lead to a possible reduction in efficiency and operational capacity.

On the other hand, other available extraction techniques (Karr, Bambara) achieve the crushing and dispersion of the two phases through a moderate cutting action realized by the edges of holes made on discs supported in a horizontal position in the solution devised by Karr, by a vertical pulsating shaft immersed in the column, moved alternately upwards and downwards in contrast with the phases, or by means of a similar cutting action carried out by the edges of holes made on discs supported in an oblique position in Bambara's solution, by a vertical rotating shaft plunged within column phases.

Other different design technologies, i.e. HIGEE (High Gravity Extraction Equipment), also based on the simultaneous use of centrifugal force (accelerations equal to 500-1000 g reached during the phases) to counteract the stable emulsions formation, include the use of stirring devices of various conformation, consisting of loose filling beds and/or equipped with spiral or zig-zag channels (zig-zag beds), rotated at high speed within suitably configured extraction columns.

These technologies are not supported by high process yields and convenient investment and management costs.

Conformation and sizes of current stirring devices are usually such as to involve only a minor portion of the liquid phases in the process, the one which is directly included in the action range of the edges of the high-speed rotating elements, directly and simultaneously in the described crushing action delegating the further interphase mass transfer of the solute to the mild diffusive movement of the dispersed phases formed therein towards the greater amount of the phases present in the column, in slow vertical movement induced by gravity.

As a result of the above, a problem that is frequently encountered in the management of liquid-liquid extraction columns of the current technique consists in a low efficiency, in terms of size and speed, of the transfer of the solute between the phases, with a negative impact on the overall process efficiency, therefore on management costs, since satisfactory times, extraction yields and energy consumption are not achieved in industrial processes.

Another problem of the extraction columns of the prior art may result because of the considerable dimensions, mainly because of height, necessary to achieve satisfactory process yields, with the consequence of entailing their installation in suitable areas far from the operational areas of the process, in which, due to height problems, it is impossible to install the extraction columns preferably at the bottom of the implant.

Prior document US 5,713,216 discloses a static apparatus for carrying out mass and energy exchange processes between an ascending vapour stream and a descending liquid stream.

In particular, an apparatus is described which comprises a plurality of coaxial chambers, extending along a main axis and open at the ends.

Each chamber contains a heat exchanger, shaped as-a finned tube, which extends helically around the axis of development of the chamber.

The fluids flowing through the apparatus are urged to remain in contact with only one heat exchanger. Apparatuses apt for mixing two counter current liquid comprising a rotating mixing unit are discloses in US 3,049,413, US 5,248,485, WO 2011/109852 and US 9,352,290.

An aim of the inventor is to at least partially solve the drawbacks of the prior art, with particular reference to the drawbacks mentioned above.

A further aim of the inventor is to provide a solution to reduce operating costs in liquid-liquid extraction processes.

An inventor goal is to provide an innovative mixing apparatus, which can be integrated within a continuously operating liquid-liquid extraction column with countercurrent phases.

In particular, a goal of the inventor is to provide a mixing apparatus, that can be used in a countercurrent flows liquid-liquid extraction column, which allows to improve the efficiency of the extraction process between phases which have a particular tendency to form emulsions, for example oily emulsions.

Some possible embodiments of an apparatus for countercurrent mixing two liquid phases, and of an extraction column comprising such apparatus, are described in the attached figures in which:
Figure 1 is a schematic side view of a mixing apparatus according to a first embodiment (Archimedean spiral);
Figure 2 shows a portion of-a finned tube used to manufacture mixing apparatuses;
Figure 3 is a bottom view of the same apparatus-in Figure 1;
Figure 3a is an enlarged detail of Figure 3;
Figure 4 is a side view of the same apparatus- in Figure 1 and Figure 3 supplemented by some constructive details;
Figure 5 shows a constructional detail of the embodiment of a mixing apparatus-obtained according to a second embodiment (with modules wound in a helical spiral);
Figure 6 is a cross-sectional side view of a construction detail of the mixing apparatus in Figure 1 relating to an indirect heat exchange system with the processing phases;
Figure 7 is a partially cross-sectional schematic view of a single-stage extraction column comprising a mixing apparatus according to the embodiment of Figure 1;
Figure 8 shows in detail the two types of gaps which are mainly formed between the contiguous modular elements when coiled in an Archimedean spiral (81) and when coiled in a helical spiral (82);
Figure 9 is a partially cross-sectional schematic view of a single-stage extraction column, using a mixing apparatus like the one in Figure 6;
Figure 10 is a partially cross-sectional side view of a multistage extraction column, for carrying out continuous countercurrent liquid-liquid extraction processes, using mixing apparatuses obtained according to the embodiment in Figure 1.

With reference to the attached figures, reference number 30 indicates an apparatus for mixing two liquid phases characterized by minimal reciprocal miscibility, which are typical of liquid-liquid extraction processes.

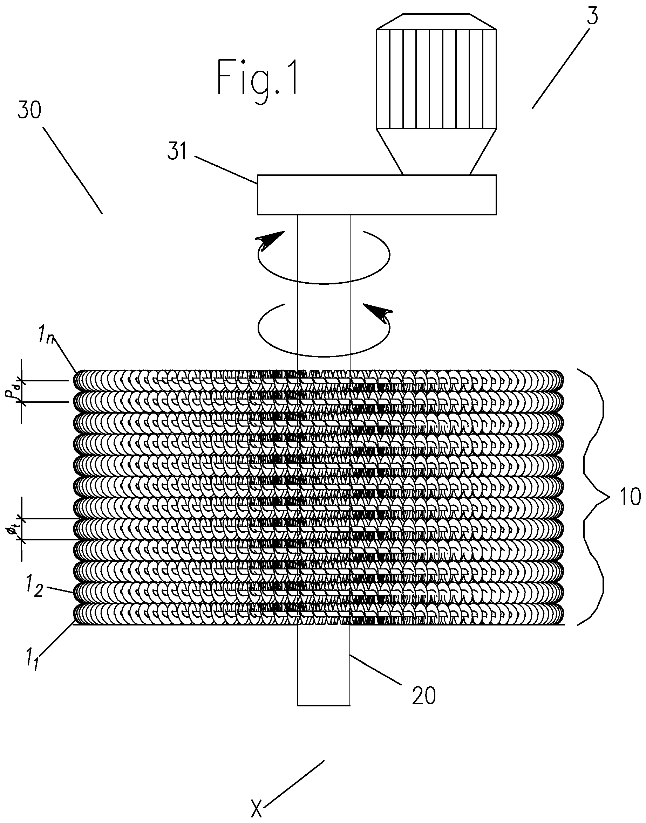

The mixing apparatus 30 comprises a support element 20 which extends along an axis of development X, and at least one mixing unit 10, better described below, integral with the support element 20 (Fig. 1).

In the illustrated examples, the mixing unit 10 occupies an approximately cylindrical volume and is coaxial with respect to the axis of development X of the support element 20.

As described below, in the event that the mixing apparatus 30 comprises several mixing units 10, the same units are distributed, for example at a constant pitch, along the axis of development X of the support element 20.

As better described below, each mixing unit 10 is a "structured filling", that is to say a filling in which the individual elements have a specific orientation, with respect to each other and with respect to the support element 20.

This structured filling makes it possible to obtain a large surface on which two liquid phases can flow in countercurrent.

The mixing apparatus 30 is held with the axis X in a vertical position.

Each mixing unit 10 comprises a plurality of modular elements 1₁, 1₂, ...,1ₙ, which are better described hereinafter.

More specifically, each mixing unit 10 comprises a nth plurality of spiral-shaped modular elements 1₁, 1₂, ...,1ₙ.

The nth spiral-shaped modular elements 1₁, 1₂, ...,1ₙ are sequentially arranged.

As better described below, in one possible embodiment the spiral-shaped modular elements 1₁, 1₂, ...,1ₙ are distributed along the axis X.

In another possible embodiment, the spiral-shaped modular elements 1₁, 1₂, ...,1ₙ are distributed concentrically around the X axis.

In the examples described below all the spiral-shaped modular elements 1₁, 1₂, ...,1ₙ contribute in defining the plurality of the shared paths that extend within the mixing unit 10.

In the illustrated embodiments, the space comprised between each pair of adjacent spiral-shaped modular elements 1ᵢ , 1ᵢ₋₁ is free of separating elements, such as walls, shields or barriers.

In particular, it should be noted that there are no separation elements urging-the fluids, which pass through the mixing unit 10, to remain in contact with only one of the spiral-shaped modular elements 1₁, 1₂, ...,1ₙ.

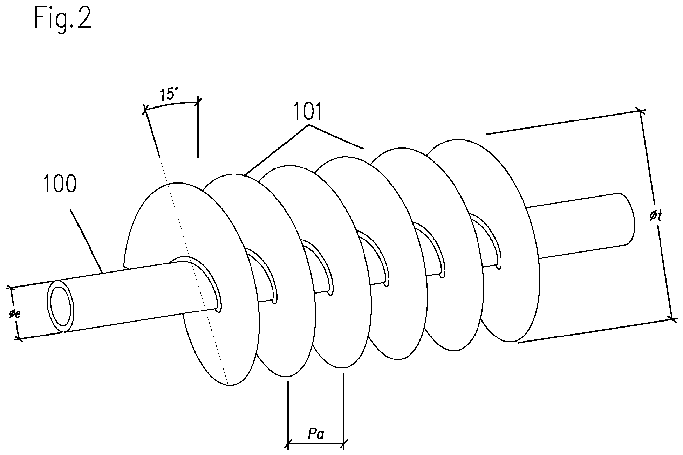

In the illustrated examples each spiral-shaped modular element 1₁, 1₂, ..., 1ₙ comprises a central section bar 100 equipped with a helical finning 101 made at a constant pitch Pa along the development direction of the central section bar (Fig.2).

In the illustrated examples, the spiral-shaped modular elements, or modules, 1₁, 1₂, ...,1ₙ are obtained using components known as "finned tubes" or "tubes with helical finning".

Therefore, each modular element 1₁, 1₂, ...,1ₙ comprises a central profile 100, for example a metal tube with a circular cross section, around which a helical finning 101 is coiled.

The finned tube has a total diameter Φt depending on the diameter of the central section bar 100 and on the finning 101 height.

In the finned tubes the helical finning 101 of the spiral-shaped modular elements 1₁, 1₂, ...,1ₙ can be obtained using a metal band of suitable height and of small thickness which is wound edgewise, perpendicularly and continuously, on the external surface of the section bar 100 along a helical spiral path with constant pitch Pa (this type of finning is also known as helical finning).

In the operation described, the metal band 101 is permanently deformed to adhere to the tube 100 and is in the shape of a continuous circular fin, corrugated towards the centre, but maintaining the peripheral length of the edge and the original overall surface.

The methods for manufacturing the finned tubes are known to the person skilled in the art.

Continuing with the description, the spiral-shaped modular elements 1₁, 1₂, ...,1ₙ which, when assembled, make up each mixing unit 10, may also be referred to as "finned tubes" or "spiral finned tubes".

In a first embodiment of the mixing unit 10, the spiral-shaped modular elements 1₁, 1₂, ...,1ₙ develop in the shape of a flat Archimedean spiral (Fig. 1, Fig. 3, Fig.4) with a pitch Ps which is for example substantially equal to the whole diameter Φt of the finned tube.

In this first embodiment, the spiral-shaped modular elements 1₁, 1₂, ...,1ₙ are arranged parallel to each other, with the same winding direction as the central section bar 100, with the same winding direction as the finning 101, and sequentially distributed with a constant pitch Pd along the axis of development X.

The distribution pitch Pd of the Archimedean spiral-shaped modular elements 1₁, 1₂, ...,1ₙ can be, for example, substantially equal to the whole diameter Φt of the finned tube.

The spiral-shaped modular elements 1₁, 1₂, ...,1ₙ thus arranged are substantially identical to each other also in length, and as they are superimposed in vertical sequence and contiguous, they form an approximately cylindrical structure.

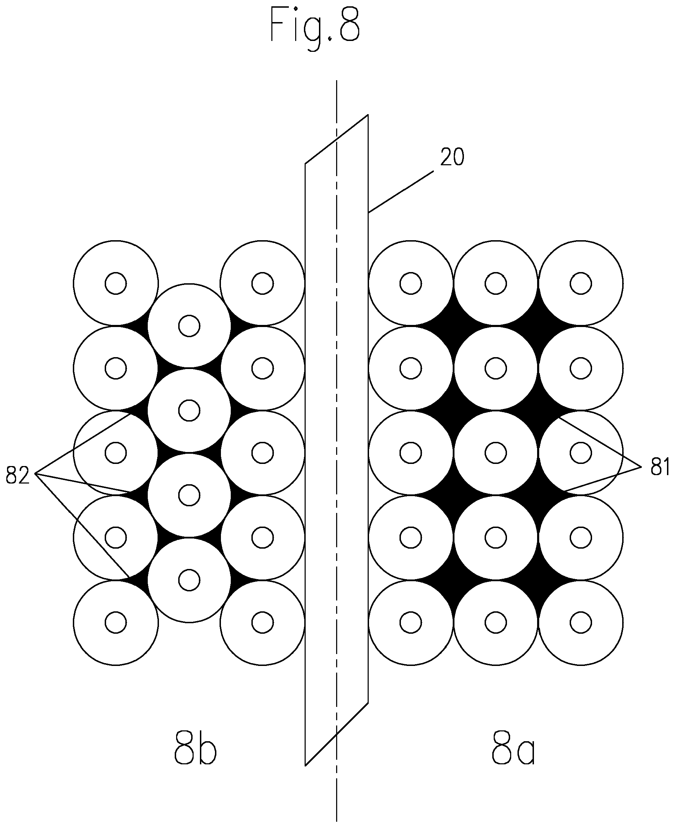

In this first embodiment, the contiguous portions of the modular elements define gaps or passages 81 with an approximately quadrangular section (detail 8a in Fig. 8).

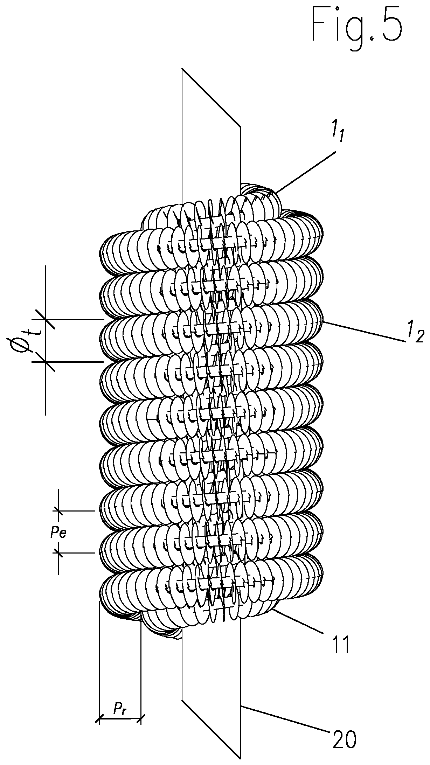

In a second embodiment of the mixing unit 10 (Figure 5) the nth spiral-shaped modular elements 1₁, 1₂, ...,1ₙ extend as helicoids (helical spirals) along the axis X and are distributed concentrically around the support element 20 of the apparatus 1.

In this second embodiment, each tube 100, 101 has a helix pitch Pe along the axis X which is substantially constant (for example a pitch Pe substantially equal to the whole diameter Φt of the finned tube).

The spiral-shaped modular elements 1₁, 1₂, ...,1ₙ are superimposed, at a constant pitch Pr (for example with a substantially constant pitch Pr equal to the external diameter of the modules Φₜ) along an orthogonal direction to the axis of development X.

In other words, the spiral-shaped modular elements are superimposed in increasing sequence with a constant pitch P both horizontally and vertically.

Also in this second embodiment, all the modular elements 1₁, 1₂, ...,1ₙ have the same winding direction as the central section bar 100 and the same winding direction as the finning 101.

Each modular element 1₁, 1₂, ...,1ₙ of the overlapping sequence is of increasing length: the innermost element 1₁ is the shortest, the following element 1₂ is longer, and so on up to the outermost 1ₙ.

Also in this second embodiment, the spiral-shaped modular elements 1₁, 1₂, ...,1ₙ form an approximately cylindrical structure.

Therefore, in both embodiments described above the mixing unit defines an approximately cylindrical shape.

In this second embodiment, the contiguous portions of the modular elements 1₁, 1₂, ...,1ₙ define gaps or passages 82 with an approximately triangular section (see detail 8b in Figure 8).

In both embodiments illustrated above, all the spiral-shaped modular elements 1₁, 1₂, ...,1ₙ help to define the tortuous paths which allow the fluids to pass through the mixing unit 10.

As written above, in the illustrated embodiments the mixing unit 10 has no separation elements (such as barriers, walls or shields) between each modular element and the following one or the preceding one 1ᵢ, 1ᵢ₊₁.

In particular, there are no concentric tubular elements for separation between a spiral-shaped modular element and the preceding or subsequent one.

Otherwise the contiguous portions of the spiral-shaped modular elements 1₁, 1₂, ...,1ₙ could not define the passageways 81, 82.

In both embodiments illustrated above, the support element 20 can be a shaft.

In both embodiments of the modular elements, the winding direction of the finning 101 can turn from right to left or from left to right.

In both embodiments described above, the contiguous portions of the finned tubular elements define paths intended to be passed through by the countercurrent liquid phases.

For the same volume, the two embodiments are substantial identical, both as regards the contact surface developed by the finned tubular elements and as regards the overall length of the edges of the fins 101.

The embodiment of the mixing unit 30 which uses modular elements 1₁, 1₂, ...,1ₙ coiled in an Archimedean spiral, can be preferred to provide mixing devices with a larger diameter and therefore with a greater volumetric capacity to be used in liquid-liquid extraction processes in columns specially arranged for this purpose.

The embodiment with helical spiral modules 1₁, 1₂, ...,1ₙ distributed concentrically around the shaft 20 may be preferable for making mixing apparatuses of smaller diameter and greater height for the same use.

In both embodiments the nth number of the modular elements 1₁, 1₂, ...,1ₙ, of each mixing unit 10, the length (along the axis X) of the mixing unit 10 and the radial size (orthogonal to the axis X) of the mixing unit 10 can vary according to the operating capacity requirements of the extraction process.

In some possible embodiments of the modular elements 1₁, 1₂, ...,1ₙ, the external diameter Φe of the metal tube 100 is not greater than 10 mm.

The pitch Pa of the finning 101 which winds around the tube 100 can vary according to the viscosity of the process phases but is preferably not less than 5 mm.

In the illustrated embodiments, the whole diameter Φt of the finned tube is not less than 30 mm with a consequent inclination of the fins with respect to the tube in the order of 15°-20°.

Purely by way of example, metal tubes 100 with an external diameter Φₑ of 8 mm can be used for making the modular elements 1₁, 1₂, ...,1ₙ, on which a metal band 101 is wrapped which has a height between 12 and 15 mm, a thickness of approximately 0.3-0.5 mm while maintaining a pitch of the finning Pa of 5 mm.

In such a case, the whole external diameter Φₜ of the finned tubular elements 1₁, 1₂, ...,1ₙ is approximately 32 - 36 mm.

The shaft 20 can have a diameter of approximately 80 mm.

Utilization of spiral finned tubes of this size makes it possible to obtain a mixing apparatus 30 which provides for -a high specific surface area, in the order of 350 - 400 m²/m³.

It should also be noted that in a volume equal to 1 dm³ of the mixing unit 10 thus arranged, the edges of the fins of the metal band 101 can have an average overall length equal to approximately 18 m.

This means that when the mixing apparatus 30 is rotated, a continuous and effective cutting action is obtained on the phases in contact, which leads to their crushing, with the dispersion of the fragments within the gaps available between the contiguous finned tubes of the apparatus structure.

In the embodiment shown in Figures 1, 3 and 4, the mixing unit 10 of the mixing apparatus 30 comprises twelve constructively identical modular elements 1₁, 1₂, ...,1ₙ, coiled in a flat Archimedean spiral around the support 20 (in the illustrated example the support 20 is a rotating shaft) and distributed at a constant pitch along the axis of development X of the shaft 20.

In this illustrative embodiment, each module 1₁, 1₂, ...,1ₙ comprises a tube 100 having an external diameter Φₑ which is equal to 8 mm on which a helical finning 101 is wound, so as to obtain a whole diameter Φₜ of the finned tube equal to 32 mm.

The shaft 20 has a diameter of 80 mm, the mixing unit 10 has an overall diameter of 870 mm and a height of 384 mm.

This mixing unit 10 achieves a volume of approximately 215 dm³ net of the volume of the shaft 20.

The overall surface of the fins 101 of this mixing unit 10 is equal to approximately 113 m², the whole length of their edges is equal to approximately 4,050 m.

In the two described embodiments (the version with Archimedean spiral modules and the version with helical spiral modules) solutions can be provided for improving the structural stability of the mixing unit 10.

For this purpose, first supports 23 can be provided, integral with the support element 20, in a number suitable for the use, arranged below in a radial pattern to support the weight of the superimposed elements 1₁, 1₂, ...,1ₙ which form the mixing unit 10.

These first supports 23 can be tubular elements of suitable diameter and length, integral with the shaft 20 and arranged radially with respect to the shaft, as better described below.

In order to further improve the structural stability of the mixing unit 10, second supports 24 (for example, tubular elements) arranged above in a radial pattern and integral with the shaft 20 can be provided (even in a smaller number than the first supports 23).

In addition to the solution described above, each mixing unit 10 can be surrounded by a retaining wire mesh 6 (for example, a robust steel mesh in several overlapping layers) to further improve the structural stability.

The mixing apparatuses 30 described above are used integrated in continuously operating countercurrent flow liquid-liquid extraction columns, made according to suitable design and management criteria to form efficient process units.

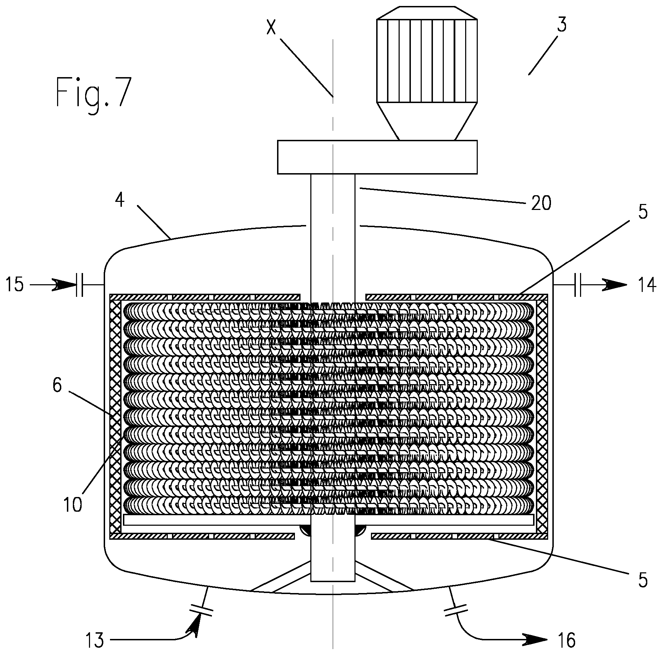

For example, the mixing apparatus 30 can be used in a single-stage liquid-liquid extraction column 4 fed by two countercurrent phases (Fig.7).

In the example of Figure 7, the mixing apparatus 30 has a single mixing unit 10 (of the type with a mixing unit comprising Archimedean spiral modular elements) positioned between two horizontal diaphragms 5,5.

The two diaphragms 5, 5 have a central hole to allow the passage of the apparatus shaft 20.

The two diaphragms 5, 5 are also provided with perforations to allow the passage of the two phases countercurrent flows; preferably the two diaphragms are perforated for distributing the two flows as uniformly as possible through the cross section of the column 4.

The mixing unit 10 of the mixing apparatus 30, which is inserted centrally, almost completely occupies the volume between the column cylindrical wall and the two diaphragms 5,5.

According to a first form of use, the extraction column 4 can be operated in "static" mode, i.e. with the mixing unit 30 idle.

If the extraction column 4 is used in static mode, the apparatus 30 operates as if it were a static structured filling.

This operating mode may be suitable for some particular cases of liquid-liquid extraction that are not particularly demanding.

The two liquid phases are fed continuously to the column 4 at the opposite ends, from above the phase with the highest density (inflow duct 15), from below the other phase (inflow duct 13), and they countercurrent flow inside the column, due to the force of gravity, interpenetrating each other.

One of the two liquid phases, dragged by the action of gravity, tends to flow preferentially in adherence on the wide inclined surface of the apparatus finned tubes, while the other phase, for the same reason, is led to countercurrent rub, on the surface tapped by the first phase, the basic conditions for the solute exchange thus subsisting.

The inclination of the fins 101 helps the efficiency of the process in the column as the length of the path in the column of the phases is increased, even if only slightly, and due to the moderate but frequent cutting effect undergone by the phases in contact with the edge of inclined fins.

The frequent interruption of the oblique countercurrent path of the phases in reciprocal contact between the facing surfaces of the numerous pairs of adjacent fins, inclined (for example, 25°), tapped on both sides, when the phases reach the edge from opposite directions and enter in the gaps that separate them, causes an abrupt disturbance to the the phases guided flow (comparable, albeit remotely in terms of effectiveness, with a mild horizontal cutting effect that would be produced by the edge of the fins of the slightly moving apparatus).

Such cutting effect, even if of minimal intensity, still helps dispersion and reciprocal mixing, with benefits for the solute exchange.

The extraction column 4 can be operated much more effectively in a "dynamic" mode, i.e. by rotating the mixing unit 10 around the axis X using motor means 3, for example a motovariator 3.

By rotating the mixing unit 10 it is in fact possible to significantly enhance the solute exchange in the liquid-liquid extraction process.

In particular, it has been observed that the rotation of the mixing unit 10 at a moderate speed (for example at rotation speeds lower than 150 rpm) makes it possible to mix poorly miscible liquid phases with considerable efficiency, while avoiding the formation of stable emulsions.

The combination of the rotary motion of the mixing unit 10 with the ascending and descending vertical motion of the liquid phases which pass through the column 4 due to the gravitational effect, results in a spiral motion which involves the phases quantitatively, with frequent interruptions of the rubbing contact of the two phases between and on the fins 101, and with continuous changes in direction.

During the entire travel in column, the liquid phases are in reciprocal contact both on the surface of the fins 101, on which they rub and by which they are urged in oblique directions with respect to the horizontal, and subsequently, having reached the edge of these, at the gaps or passages 81, 82 (Fig. 8), where they are subjected to the clear and decisive cutting action created by the edges of the fins and to the consequent fragmentation, dispersion and reciprocal mixing in these gaps or passages

The phases in contact, therefore, carry out a continuous and extensive solute exchange process, performing the liquid-liquid extraction by operating at a low number of revolutions.

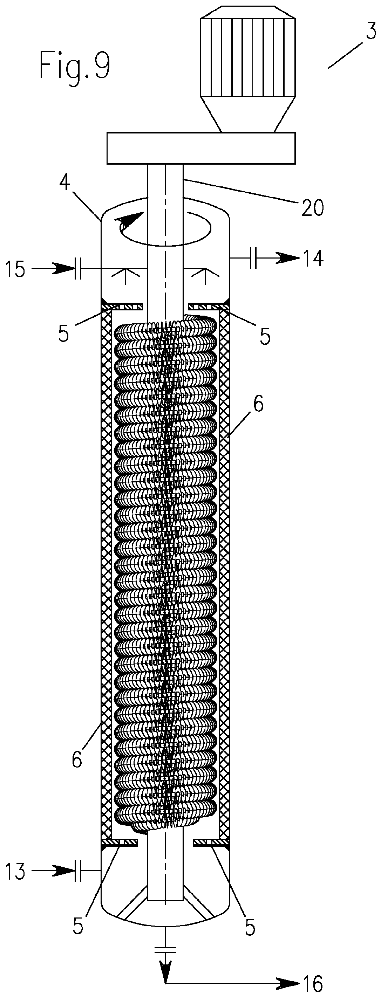

The extraction column in Figure 9 differs from the extraction column in Figure 7 in that the mixing unit 10 is obtained by helical modular elements arranged concentrically with respect to each other.

The inventor believes, without aiming at providing a scientific explanation, that the cutting edge mixing effect produced on the two phases in contact, continuously and extensively, by the whole edge of the fins 101 present on the apparatus finned tubes 10 in rotation, causes the localized formation of micro-vortices which lead to the crushing of the two phases, with the creation of drops, which are then dispersed, having minute sizes but such as not to lead to the formation of stable emulsions.

A reciprocal contact is thus created, which varies instant by instant, between the two dispersed micronized phases which are simultaneously subjected to the action of gravity and to the thrust and transport action exerted by the rotary device, by which they are urged and accompanied to pass in countercurrent between the pairs of contiguous fins following long spiral trajectories, rubbing on the large facing surfaces of the fins and continuously renewing the reciprocal contact surface, thus performing an effective solute exchange.

This phenomenon is conditioned by the rotation speed of the stirring device, for two reasons: neither the formation of stable emulsions linked to much too high cutting speeds, nor the excessive prevalence of the horizontal speed induced by the device over the vertical one must be allowed, in both directions, linked to the gravity of the phases, with the effect of excessively lengthening the travel times and minimizing the column's operational capacity.

The inventor believes that another apparatus feature consists in that the phenomenon of stirring, forming drops and mixing is created in a simultaneous and progressive way by all its component parts, the fins of the modular elements, which are uniformly placed in the whole cylindrical volume of the impeller, with analogous although not identical modalities since the situation changes continuously along the whole path according to the position in which the phases included in the apparatus are momentarily located.

Actually, it is believed that even the low volume of the cylindrical crown between the mixing unit 10 and the inner wall of the column 4 is involved in the solute interphase exchange process by the effective stirring created by the fins placed on the edge of the apparatus, which project a portion of the phases in the process outwards, keeping them in a turbulent condition.

The already mentioned steel mesh 6, if present, can further contribute to the coalescence of particles of the two phases that come into contact, enabling their reciprocal solute exchange.

To further improve the coalescence process, steel mesh can also be arranged on the upper and lower surfaces of the diaphragms 5.

In conclusion, the solute exchange process produced by the action of the modules 1₁, 1₂, ...,1ₙ of the mixing unit 10 on the phases within the apparatus simultaneously involves the entire volume of the two phases present in the column between the cylindrical wall of the column 4 and the two horizontal perforated discs 5, 5, excluding the phases fed to the column included in the upper and lower bottoms, which have not yet involved into entered the process.

What has been described makes a constructive and operational difference compared to the known prior art, in which the direct cutting action performed on the coupled phases to crush and disperse them involves only a negligible fraction of the liquid phases in the process and is performed at very high speed (therefore frequently stable emulsions are produced which require the adoption of accessory techniques to resolve them).

In fact, the diffusion of the agglomerations of the formed microdrops towards the contour portion, volumetrically preponderant, of the phases in vertical movement in the two directions not involved in the direct mixing action, is entrusted to the surplus of kinetic energy, impressed on the agglomerations of the formed microdrops, so that it continues in them the interphase exchange of the material, however reduced in size and effectiveness.

On the other hand, the apparatus 30, due to the innovative structure with which it is made and the operating criteria adopted with which it is used to carry out the liquid-liquid extraction in the column involves, continuously and simultaneously, almost all of the phases in the process within its cylindrical structure and, for the minimum remaining portion, immediately externally.

Basically, the apparatus 30, therefore, provides an instrument suitable for being integrated in a column 4 as a mixing instrument for carrying out particularly efficient continuous processes of liquid-liquid extraction of a solute between two mutually immiscible phases fed in reciprocal countercurrent, to carry out the liquid-liquid extraction process between such phases.

The path of the liquid phases along in the column, due to the dragging action induced by the rotating fins 101 of the apparatus 30, is greater than the height of the column even when operating at low rotation speeds.

This impacts the volumetric operating capacity of the column.

A technology limit is in fact the reduction of the volumetric operating capacity of the column (the flow rate of the phases passing through the column due to the effect of gravitational energy) due to the effect deriving from the lengthening of the internal path of the phases fed within the column, following spiral trajectories for the combined action of the stirring device and gravity, with a consequent increase in the time period spent inside.

As a counterweight to the above, however, there are significantly higher process yields, lower management costs with the same capacity, the possibility of suitable placement of the column even at the bottom of the process implant.

The spiral paths of the two phases passing through the mixing unit 10 are much longer, even if different from each other in terms of shape and length because they are affected by the rotation speed and the distance from the shaft, compared to those which would go through the phases flowing vertically in reciprocal contact due to gravity alone in the absence of stirring.

This leads to a longer permanence of the phases in the column but altogether, due to the intense cutting action exerted by the apparatus fins, the quality and extent of the reciprocal contact between the phases considerably improve and, therefore, the efficiency and the yield of the overall extraction process is considerably increased.

It should be pointed out here, with reference to the two constructive solutions described (Archimedean spiral and helical spiral structures), that in a volume of a mixing apparatus equal to 1 dm³ it is possible to provide an average overall length of the edges of the fins present equal to approximately 18 m using the modules having the conformations described.

At a rotation speed of the shaft 20 equal to, for example, 10 rpm, this corresponds to an overall length of the cutting effect, carried out by the edges of the fins 101 present in one dm³ of the device, equal to approximately 180 m/minute, which is of course not uniform because having an increasing intensity according to the distance from the shaft.

By way of example, in the case of the apparatus 30 with a mixing unit 10 having a diameter of 870 mm, a height of 384 mm and a volume of 225 dm³ (shaft not included), a widespread and continuous nonviolent cutting action is exerted in one minute, by operating at 60 rpm, even if not uniform, for a total length of about 243,000 m (about 486,000 m at 120 rpm).

In some particular embodiments, the apparatus 30 can also function as a heat exchanger, and therefore it allows for "in process" heating or cooling of the phases within the column 4.

Heating or refrigerating may, in fact, be desired in some cases of liquid-liquid extraction to keep the extraction process at a desired temperature and hence to enhance the progress of the extraction process.

For example, if the liquid-liquid extraction process is exothermic (for example there is a possible heat of solubilization of the solute during the extracting phase) the temperature increase tends to reduce the efficiency of the process itself, and it is desirable to act to prevent the process temperature from rising.

On the other hand, if one or both phases are characterized by a significant viscosity, a rise in temperature makes the phases more fluid enabling the solute exchange from the starting phase to the extracting phase.

As better illustrated below, adopting appropriate additions and constructive modifications on the stirring apparatus 30, it is possible for the spiral-shaped finned tubes 1₁, 1₂, ...,1ₙ to also perform a function as a heat exchangers, if this function is necessary, or in any case useful in perspective, for the processes to be implemented.

Some essential structural modifications must be introduced to the configuration of the shaft 20 during the design phase.

For this purpose, the shaft 20 can be a hollow shaft, internally divided into sections, in order to also fulfill the function of feeding a heat transfer fluid within the finned tubes 1₁, 1₂, ...,1ₙ.

More precisely, the shaft 20 can be configured in such a way as to be able to receive a heat transfer fluid from an external source and then introduce it into the finned tubes, which are plunged in the liquid processing phases, and subsequently receive, at the outlet of the finned tubes, the same fluid modified in the original temperature according to the indirect heat exchange carried out with the phases.

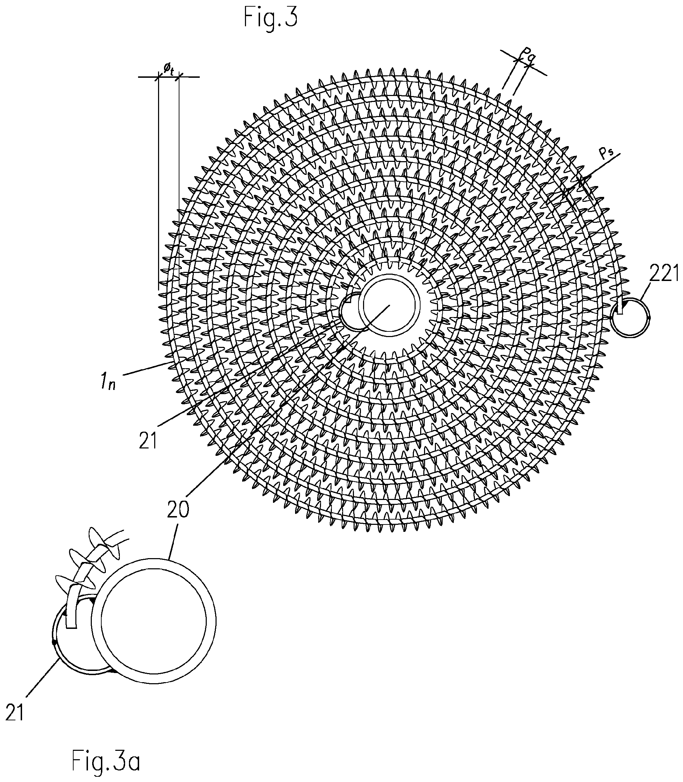

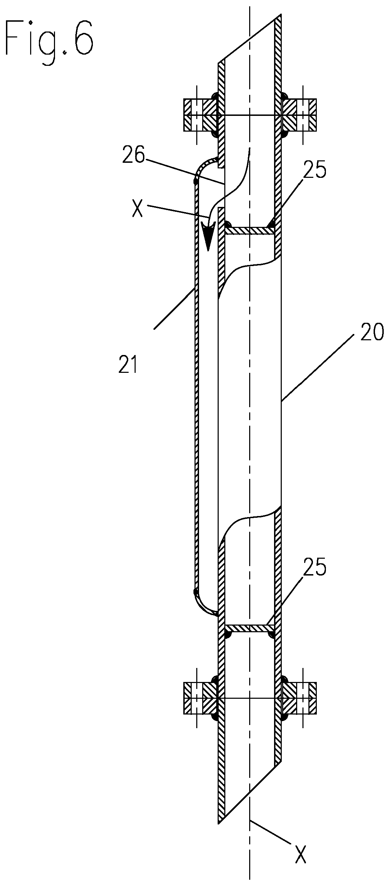

In an illustrated example (Fig. 6) the hollow shaft 20 is divided internally by one or more separating metal partitions 25, welded to the contour to provide a seal, and has at least one pair of side holes 26, 27 (a pair of holes at the opposite sides of each separation partitions) in hydraulic communication with a first manifold 21 (Fig. 3 and Fig. 6) extending parallel to the shaft 20.

Each manifold 21 is then in hydraulic communication with one end of the finned tubes 1₁, 1₂, ...,1ₙ.

The manifolds 21 therefore perform the function of receivers/distributors of the heat transfer liquid coming from the shaft 20 (or directed to the shaft 20).

In the case of the embodiment of Figures 3 and 6, the first manifold 21 can comprise a vertical semicylindrical element, closed at the upper and lower ends, with an original diameter at least equal to the external diameter of the finned coils, welded externally to the central shaft 20.

The wall of each manifold 21 comprises a nth plurality of equidistant holes distributed along the axis of development of the shaft, to enable a hydraulic communication with one end of the finned tubes 1₁, 1₂, ...,1ₙ.

At the upper end of the manifold 21 a first hole 26 (Fig.6) is provided for creating the hydraulic communication with the inner part of the shaft 20 and hence allowing the outlet (or the inlet) of the heat transfer fluid from the inner part of the shaft 20 and the inlet of the heat transfer fluid into the manifold 21.

The heat transfer fluid is then distributed from the manifold 21 in the finned tubes 1₁, 1₂, ...,1ₙ through the nth holes described above.

The heat transfer fluid travels through the finned tubes 1₁, 1₂, ...,1ₙ to the end and then enters the second manifold 221.

The second manifold 221 has a vertical development (parallel to the axis X) and provides laterally nth holes, in vertical succession, to allow hydraulic communication with the other end of the finned tubes 1₁, 1₂, ...,1ₙ and provides for a lower hole to allow hydraulic communication with the hollow shaft 20.

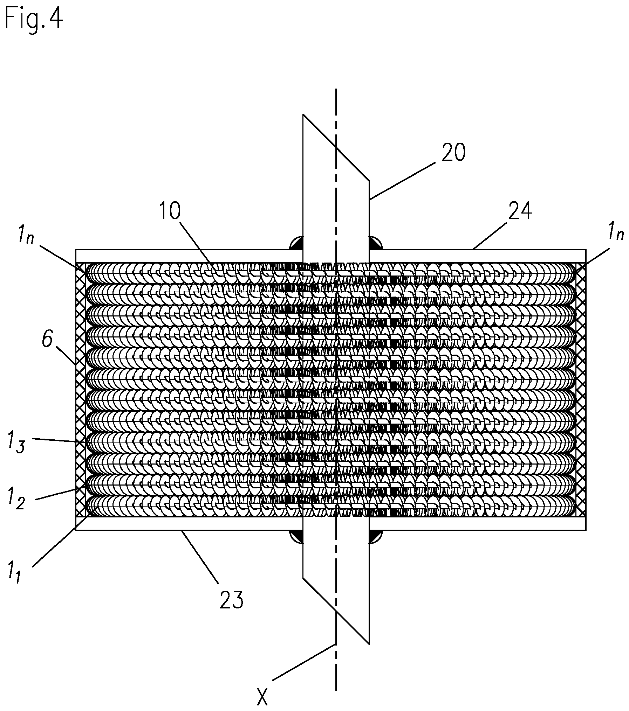

The heat transfer fluid flowing out of the ends of the coils enters the second manifold 221 through the holes, flows out from the bottom the second manifold to enter the horizontal hollow support 23 (Fig.4) and is brought back to the shaft 20.

The shaft is internally shaped to receive the fluid and then let it go out in the lower part to lead it outside, so as to complete the indirect heat exchange process between the fluid and the phases in the column.

In case the mixing apparatus 30 comprises several mixing units (or it is used in a multistage extraction column as illustrated below) the shaft 20 must provide-the already mentioned internal sections at various heights.

Such internal sections are hydraulically connected, according to the construction criteria described for the case of the single stage, to the ends of the finned tubes 1₁, 1₂, ...,1ₙ of each of the various mixing units present, both to introduce the heat transfer fluid and to receive it at each exit from the fed stages, and finally to let it flow from the column.

The inlet of the heat transfer fluid in the devices 10, the internal circulation and the outlet are thus made possible, in order to carry out the indirect heat exchange with the liquid phases present within-the column.

What has been described above with reference to the case of a heat transfer flow entering the upper part of the column, can be implemented in a symmetrical way to allow the reverse process entering the lower part.

In this way, an indirect heat exchange can be achieved without any contamination between the heat transfer fluid and the processing phases.

The heat transfer fluid introduced can be, for example, chilled water or water vapour or heated water.

Water vapour introduced into the finned tubes can also be used to clean the finned tubes of the mixing apparatus 30, at the end of the extraction process, so as to ease the removal, possibly also by evaporation, of residues of liquid phases adhering to the fins 101 which could contaminate subsequent liquid-liquid extraction processes.

Naturally, for a complete cleaning of the extraction column, steam has also to be introduced inside the column, in particular if the fluids in the process are fermentable and the column is not kept in an inert atmosphere during idling periods.

To cope with demanding extraction processes, both due to the difficulties connected to the nature of the process and to the efficiency and yield objectives to be achieved, it is however necessary to increase the length of the path of the two phases in the process to increase the overall extent of the solute reciprocal exchange, and one solution is to increase the height of the column and that of the impeller of the stirring device.

Alternatively, as an even more effective solution, a series of mixing units 10, 10, ,,,, 10 supported by the same shaft 20 separated from each other by perforated discs can be arranged in stages until achieving the required efficiency of agitation.

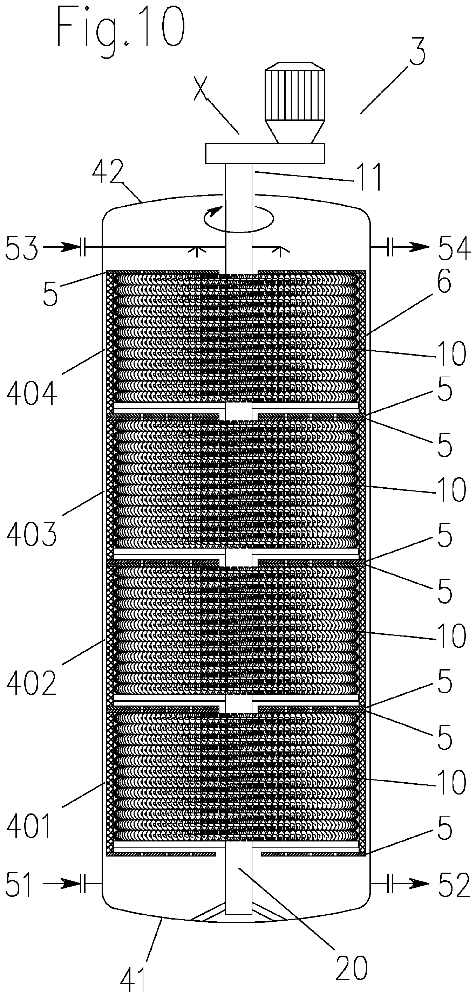

Figure 10 shows, by way of example, an embodiment of such multi-stage extraction column 40 for carrying out continuous countercurrent liquid-liquid extraction processes, which comprises a mixing apparatus 30 in multi-stage execution (in the example described four stages are considered) suitable for continuous operation in dynamic mode.

The column 40 is provided with a suitable diameter enabling to achieve the required volumetric capacity, by installing a mixing apparatus 30 which comprises four mixing units 10 mounted on the same shaft 20, housed individually in a plurality of chambers 41, 401, 402, 403 , 404, 42 distributed along a vertical axis X, hydraulically connected in series to each other and separated by diaphragms 5 (of the removable and replaceable type), operating in functional sequence.

Fig. 10 shows the process chambers 401, 402, 403, 404, in each of which a mixing unit 10 of the apparatus 30 is present and active.

In addition to the four process chambers, there are two process chambers 41 (lower density liquid phase inlet) and 42 (higher density liquid phase inlet).

The lower chamber 41 of the column communicates hydraulically with a first duct 51 and with a second duct 52, while the upper chamber 42 of the column communicates with a third duct 53 and with a fourth duct 54.

The duct 51 is arranged to feed the liquid phase of lower specific weight from below, while the duct 53 is arranged to feed the liquid phase of higher specific weight from above.

The duct 52 is arranged for the outlet of the phase coming from above while the duct 54 is arranged for the outlet of the phase coming from below.

The extraction column 40 comprises a plurality of perforated separation discs 5 between the intermediate chambers 41, 401, 402, ...40n, 42.

In order to flow from one chamber to the next, the liquid phases that are introduced into the multistage column 4 are forced to pass through a minimum amount of the central circular crowns arranged in the diaphragms 5 for the passage of the shaft 20 and in a smaller amount of the phases, and in almost all the portions of the small holes, which are suitably distributed on the surface of the diaphragms in order to obtain an optimal distribution of the flow of the phases to the impeller which they must reach.

The holes in the-discs can provide for different arrangements and sizes according to the needs presented by the different cases of the extraction to be made.

For this purpose, the discs can be made divided into two reassembling halves, so as to facilitate their disassembly from inside the column 4 and the subsequent reassembly to replace them, if necessary, with others more suitable discs for the process to be carried out.

At the end of the extraction process carried out in the column, the second duct 52 is used for the final outlet of the phase originally coming from above, and the fourth duct 54 is used for the outlet of the phase coming from below.

The liquid phase of greater specific weight which is introduced into the upper chamber 42 sequentially descends through the intermediate chambers 404, 403, 402, 401 and reaches the lower chamber 41 from where it then flows out with a composition modified with respect to the composition it had at the inlet.

Similarly, the liquid phase of lower specific weight is introduced into the lower chamber 41, rises and sequentially passes through the intermediate chambers 401, 402, 403, 404, arrives in the upper chamber 42 from where it then flows out modified.

In the illustrated embodiment, the column 4 has a cylindrical section and the chambers 41 and 42 consists of the upper and lower curved ends of the column, while the intermediate chambers 401, 402, 403, 404 are cylindrical, defined by the interposition of diaphragms 5 (horizontal perforated discs) with the external edge which is made integral with the column wall, distributed along the axis X and parallel to each other, which partition the internal volume of the column 4.

The diaphragms 5 are of the type already described, and have the same function of optimal distribution of the phases to the various operating stages of the column.

On the inner cylindrical surface of the intermediate chambers 401, 402, ...40n of the column 4, and also on the upper and lower surfaces of the discs 5, a layer of dense metal meshes, for example of the corrugated type, suitable to favour, by contact, the coalescence of minimal fractions of the phases which may have emulsified as a result of the peripheral speed reached by the mixing units 10, even more so if in this multistage process, which is longer and more demanding, more complex compositions are created in the phases.

If still present in the phases, these finely dispersed fractions can, in their flowing upward or downward, coming into contact with the layers of metal mesh adhering to the wall of the column and to the diaphragms 5, be facilitated in continuing the reciprocal exchange of material and their subsequent aggregation.

In each of the chambers 401, 402, 403, 404 into which the column 4 is divided, the mixing unit 10 of the apparatus 30 present herein simultaneously involves almost all of the volume of the two processing phases, which is another fundamental distinctive parameter that characterizes the technology described herein.

Obviously, in an alternative form of use, for less demanding uses, the extraction column 4 can be operated in a "static" mode, that is to say with the mixing units 10, 10 ..., 10 in idle condition.

The selection of the type of apparatus suitable for the process to be carried out in the column, the definition of the operating methods suitable for carrying it out successfully and, subsequently, the structural sizing of the integrated column-stirrer system, must be carried out with particular regard to the design objectives for achieving the required performance, especially if variable extraction column usage is expected.

The rotation modes of the apparatus 30 are evaluated, case by case, depending upon the design objectives, the chemical-physical characteristics of the phases, the size of the apparatus-configured as necessary, with the aim of ensuring high operating flexibility.

For this purpose, the apparatus 30 can comprise a regulator of the direction and speed of rotation of the mixing units 10, also arranged to be able to intermittently reverse the direction of rotation, an option which, in some cases, can be useful for the extraction process.

Basically, with the other process conditions being equal, the increase within certain limits of the rotation speed of the single-stage or multi-stage mixing units 10 can positively influence the extent and quality of the fragmentation of the phases and therefore the efficiency of the extraction process, but also implies an increase, as already described, of the path in the column of the phases dragged by the fins, thus decreasing the volumetric treatment capacity of the column.

In the illustrated embodiments, the rotation speed of the shaft 20 of the extraction column 1 can usually be between 30 and 60 rpm, depending on the diameter of the mixing unit 10 and the nature of the phases in the process, so as to obtain the necessary fragmentation and dispersion of the two phases provided, so long as to avoid stable emulsions.

Basically, in case of small diameter mixing units the rotation speed can reach higher values, even over 120 rpm.

It should be noted that, equipped with the described mixing apparatuses 30, extraction columns of limited dimensions (particularly in height), with high extraction yields, reduced energy consumption and high operational flexibility can be made.

It should also be emphasized that the columns described above make it possible to carry out liquid-liquid extraction processes without the need to adopt heterogeneous expedients, with respect to the conventional process, to contrast the formation of stable emulsions.

Due to their distinguishing features, the extraction columns described above prove to be particularly advantageous in research and production activities of pharmaceutical chemistry, fine-chemicals, biotech and food industries, as well as in related solvent recovery processes by distillation to resolve azeotropes, or to allow the processing of mixtures of extreme complexity in terms of number of components (reducing their number) or the thermolability of non-volatile components.

The process efficiency achieved by the columns also allows to use models of modest height, which can be installed "at the bottom of the implant" even in industrial process areas, inside buildings where there are height limitations.

| LIST OF REFERENCE NUMBERS | |
|---|---|
| 1₁, 1₂, ...,1ₙ, | Modular elements, or modules |
| 10 | Mixing unit |
| 13 | Inflow duct from above |
| 14 | Outflow duct from above |
| 15 | Inflow duct from below |
| 16 | Outflow duct from below |
| 100 | Section bar |
| 101 | Metal band for helical finning |
| 20 | Support element, Shaft |
| 21 | First manifold |
| 221 | Second manifold |
| 22 | First supports |
| 23 | Second supports |
| 24, 24 bis, 25, 25 bis, | Tubes for supporting and distributing the heat transfer liquid |
| 25 | Partitions |
| 26, 27 | Side holes on the shaft |
| 3 | Motor means |
| 30 | Mixing apparatus |
| 31 | Speed reducer |
| 4 | Single-stage extraction column |
| 40 | Multi-stage extraction column |
| 41 | Lower chamber |
| 42 | Upper chamber |
| 401,402, 403, 404 | Intermediate chambers |
| 5, 5 | Diaphragm |
| 51 | First duct or inflow duct from below |
| 52 | Second duct or outflow duct from below |
| 53 | Third duct or inflow duct from above |
| 54 | Fourth duct or outflow duct from above |
| 6 | Metal mesh |
| 81, 82 | Passageways |
| X | Axis of development of the shaft 20 |
| Pa | Pitch of the finning of the finned tube |
| Pd | Distribution pitch, along the axis X, of the finned tubes that develop in the shape of a flat Archimedean spiral |
| Pe | Helix pitch of the finned tube along the axis X |
| Pr | Distribution pitch of the finned tubes that have a spiral-shaped extension along a direction orthogonal to the axis X. |
| Ps | Pitch of the Archimedean spiral |
| Φₑ | Diameter of the metal tube |
| Φₜ | Total diameter of the finned tube |

## Claims

1. An apparatus (30) for mixing two countercurrent liquid phases in liquid-liquid extraction processes comprising:
- a shaft (20), extending along a vertical axis (X), connected to a motor (3);
- at least one mixing unit (10), integral with said shaft (20);
each mixing unit (10) comprising a nth plurality of modular elements (1₁, 1₂, ...,1ₙ), which have a spiral-shaped extension around said shaft (20) **characterized in that** said nth modular elements (1₁, 1₂, ...,1ₙ) which have a spiral-shaped extension around said shaft (20) are spiral finned tubes.

2. The apparatus (30) as claimed in claim 1, wherein said nth modular elements (1₁, 1₂, ...,1ₙ) are distributed along said axis (X), and wherein each of said nth modular elements (1₁, 1₂, ...,1ₙ) develop in the shape of a flat Archimedean spiral.

3. The apparatus (30) as claimed in 1, wherein each element of said nth plurality of modular elements (1₁, 1₂, ...,1ₙ) has a cylindrical helical spiral development and wherein said nth modular elements (1₁, 1₂, ...,1ₙ) are concentric with respect to said axis (X).

4. The apparatus (30) as claimed in any of the preceding claims, wherein the space comprised between each pair of adjacent modular elements (1ᵢ, 1ᵢ₊₁) is free of separating walls.

5. The apparatus (30) as claimed in any of the preceding claims , wherein said shaft (20) is a hollow shaft in fluid communication with said nth modular elements (1₁, 1₂, ...,1ₙ).

6. The apparatus (30) as claimed in any of the preceding claims further comprising a regulator for adjusting the speed of rotation and direction of rotation of said motor (3).

7. An extraction column for carrying out continuous countercurrent liquid-liquid extraction processes, comprising:
- a plurality of chambers (41, 401, 402, ...40n, 42) hydraulically connected in series to each other and distributed along a vertical axis (X), said plurality of chambers (41, 401, 402, ...40n, 42) comprising:
- a lower chamber (41), communicating hydraulically with a first duct (51) and with a second duct (52),
- an upper chamber (42), communicating hydraulically with a third duct (53) and with a fourth duct (54),
- wherein said first duct (51) is arranged to feed a liquid phase of lower specific weight from below, while said third duct (53) is arranged to feed a liquid phase of higher specific weight from above,
- and wherein said second duct (52) is arranged for the outlet of the phase coming from above, and said fourth duct (54) is arranged for the outlet of the phase coming from below;
- at least one intermediate chamber (41, 401,402, ...40n, 42), in which the liquid-liquid extraction process takes place,
- a plurality of perforated separation discs (5) between the chambers, with holes having different disposition and size, in two pieces so as to allow their disassembly and reassembly from inside the column, if necessary,
- said extraction column (4) comprising an apparatus for mixing two countercurrent liquid phases as claimed in any of claims 1 to 6.

8. Use of an apparatus (30) comprising:
- a shaft (20), extending along a vertical axis (X), connected to a motor (3);
- at least one mixing unit (10), integral with said shaft (20);
- each mixing unit (10) comprises a nth plurality of sequentially arranged modular elements (1₁, 1₂, ...,1ₙ) which have a spiral-shaped extension around said shaft (20);
for mixing two countercurrent liquid phases in liquid-liquid extraction processes **characterized in that** said nth modular elements (1₁, 1₂, ...,1ₙ) are spiral finned tubes.

## Patentansprüche

1. Vorrichtung (30) zum Mischen von zwei im Gegenstrom fließenden flüssigen Phasen in Flüssig-Flüssig-Extraktionsverfahren, umfassend:
- eine Welle (20), die sich entlang einer vertikalen Achse (X) erstreckt und mit einem Motor (3) verbunden ist;
- mindestens eine Mischeinheit (10), die einstückig mit der Welle (20) ausgebildet ist; wobei
jede Mischeinheit (10) eine n-te Vielzahl von modularen Elementen (1₁, 1₂, ..., 1ₙ) umfasst, die eine spiralförmige Erstreckung um die Welle (20) herum haben, **dadurch gekennzeichnet, dass**
die n-ten modularen Elemente (1₁, 1₂, ..., 1ₙ), welche eine spiralförmige Erstreckung um die Welle (20) herum haben, Spiralrippenrohre sind.

2. Vorrichtung (30) nach Anspruch 1, wobei die n-ten modularen Elemente (1₁, 1₂, ..., 1ₙ) entlang der Achse (X) verteilt sind, und wobei jedes der n-ten modularen Elemente (1₁, 1₂, ..., 1ₙ) sich in Form einer flachen archimedischen Spirale entwickelt.

3. Vorrichtung (30) nach Anspruch 1, wobei jedes Element der n-ten Vielzahl von modularen Elementen (1₁, 1₂, ..., 1ₙ) einen zylindrischen schraubenförmigen Spiralverlauf aufweist und wobei die n-ten modularen Elemente (1₁, 1₂, ..., 1ₙ) konzentrisch in Bezug auf die Achse (X) sind.

4. Vorrichtung (30) nach einem der vorhergehenden Ansprüche, wobei der Raum zwischen jedem Paar benachbarter Modulelemente (1ᵢ, 1ᵢ₊₁) frei von Trennwänden ist.

5. Vorrichtung (30) nach einem der vorhergehenden Ansprüche, wobei die Welle (20) eine Hohlwelle ist, die in Fluidverbindung mit den n-ten modularen Elementen (1₁, 1₂, ..., 1ₙ) steht.

6. Vorrichtung (30) nach einem der vorhergehenden Ansprüche, die ferner einen Regler zur Einstellung der Drehgeschwindigkeit und der Drehrichtung des Motors (3) umfasst.

7. Extraktionskolonne zur Durchführung von kontinuierlichen Flüssig-Flüssig-Extraktionsverfahren im Gegenstrom, umfassend:
- eine Vielzahl von Kammern (41, 401, 402, ... 40n, 42), die hydraulisch in Reihe miteinander verbunden und entlang einer vertikalen Achse (X) verteilt sind, wobei die Vielzahl von Kammern (41, 401, 402, ... 40n, 42) umfasst:
- eine untere Kammer (41), die hydraulisch mit einer ersten Leitung (51) und mit einer zweiten Leitung (52) in Verbindung steht
- eine obere Kammer (42), die hydraulisch mit einer dritten Leitung (53) und mit einer vierten Leitung (54) in Verbindung steht,
- wobei die erste Leitung (51) zum Zuführen von unten einer flüssigen Phase mit geringerem spezifischem Gewicht angeordnet ist, während die dritte Leitung (53) zum Zuführen von oben einer flüssigen Phase mit höherem spezifischem Gewicht angeordnet ist,
- und wobei die zweite Leitung (52) zum Auslassen der von oben kommenden Phase angeordnet ist, und die vierte Leitung (54) zum Auslassen der von unten kommenden Phase angeordnet ist;
- mindestens eine Zwischenkammer (41, 401, 402, ... 40n, 42), in der der Flüssig-Flüssig-Extraktionsprozess stattfindet,
- eine Vielzahl von perforierten Trennscheiben (5) zwischen den Kammern mit Löchern unterschiedlicher Anordnung und Größe, die aus zwei Teilen bestehen, um gegebenenfalls ihre Demontage und ihren Wiederzusammenbau aus dem Inneren der Kolonne zu ermöglichen,
- wobei die Extraktionskolonne (4) eine Vorrichtung zum Mischen von zwei im Gegenstrom fließenden flüssigen Phasen nach einem der Ansprüche 1 bis 6 umfasst.

8. Verwendung einer Vorrichtung (30), umfassend:
- eine Welle (20), die sich entlang einer vertikalen Achse (X) erstreckt und mit einem Motor (3) verbunden ist;
- mindestens eine Mischeinheit (10), die einstückig mit der Welle (20) ausgebildet ist; wobei
- jede Mischeinheit (10) eine n-te Vielzahl von nacheinander angeordneten modularen Elementen (1₁, 1₂, ..., 1ₙ) umfasst, die eine spiralförmige Erstreckung um die Welle (20) herum haben;
zum Mischen zweier im Gegenstrom fließender flüssiger Phasen in Flüssig-Flüssig-Extraktionsverfahren, **dadurch gekennzeichnet, dass** die n-ten modularen Elemente (1₁, 1₂, ..., 1ₙ) Spiralrippenrohre sind.

## Revendications

1. Appareil (30) de mélange de deux phases liquides à contre-courant dans des procédés d'extraction liquide-liquide, comprenant:
- un arbre (20), s'étendant selon un axe vertical (X), relié à un moteur (3);
- au moins une unité de mélange (10), solidaire dudit arbre (20);
chaque unité de mélange (10) comprenant une pluralité n d'éléments modulaires (l₁, l₂, ..., lₙ) qui s'étendent en spirale autour dudit arbre (20), **caractérisé en ce que**
lesdits n éléments modulaires (l₁, l₂, ..., lₙ) qui
s'étendent en spirale autour dudit arbre (20) sont des tubes à ailettes en spirale.

2. Appareil (30) selon la revendication 1, dans lequel lesdits n éléments modulaires (l₁, l₂, ..., lₙ) sont répartis le long dudit axe (X), et dans lequel chacun desdits n éléments modulaires (l₁, l₂, ..., lₙ) se développe sous la forme d'une spirale d'Archimède plate.

3. Appareil (30) selon la revendication 1, dans lequel chaque élément de ladite pluralité n d'éléments modulaires (l₁, l₂, ..., lₙ) présente un développement en spirale hélicoïdale cylindrique et dans lequel lesdits n éléments modulaires (l₁, l₂, ..., lₙ) sont concentriques par rapport audit axe (X).

4. Appareil (30) selon l'une quelconque des revendications précédentes, dans lequel l'espace compris entre chaque paire d'éléments modulaires adjacents (lᵢ, lᵢ₊₁) est exempt de parois de séparation.

5. Appareil (30) selon l'une quelconque des revendications précédentes, dans lequel ledit arbre (20) est un arbre creux en communication fluidique avec lesdits n éléments modulaires (l₁, l₂, ..., lₙ).

6. L'appareil (30) selon l'une quelconque des revendications précédentes comprenant en outre un régulateur pour ajuster la vitesse de rotation et le sens de rotation dudit moteur (3).

7. Colonne d'extraction pour effectuer de procédés d'extraction liquide-liquide à contre-courant continu, comprenant:
- une pluralité de chambres (41, 401, 402, ...40n, 42) reliées hydrauliquement en série et réparties le long d'un axe vertical (X), ladite pluralité de chambres (41, 401, 402, ...40n, 42) comprenant:
- une chambre inférieure (41) communiquant hydrauliquement avec un premier conduit (51) et un deuxième conduit (52),
- une chambre supérieure (42) communiquant hydrauliquement avec un troisième conduit (53) et un quatrième conduit (54),
- dans laquelle ledit premier conduit (51) est agencé pour alimenter une phase liquide de faible masse spécifique par le bas, tandis que ledit troisième conduit (53) est agencé pour alimenter une phase liquide de masse spécifique plus élevée par le haut,
- et dans laquelle ledit deuxième conduit (52) est agencé pour la sortie de la phase provenant du haut, et ledit quatrième conduit (54) est agencé pour la sortie de la phase provenant du bas;
- au moins une chambre intermédiaire (41, 401, 402, ...40n, 42), dans laquelle se déroule le procédé d'extraction liquide-liquide;
- une pluralité de disques de séparation perforés (5) entre les chambres, avec des trous ayant une disposition et une dimension différentes, en deux parties de manière à permettre leur démontage et leur remontage depuis l'intérieur de la colonne, si nécessaire;
- ladite colonne d'extraction (4) comprenant un dispositif de mélange de deux phases liquides à contre-courant selon l'une quelconque des revendications 1 à 6.

8. Utilisation d'un appareil (30) comprenant:
- un arbre (20), s'étendant le long d'un axe (X), relié à un moteur (3);
- au moins une unité de mélange (10), solidaire dudit arbre (20);
- chaque unité de mélange (10) comprend
une pluralité n d'éléments modulaires (l₁, l₂, ..., lₙ) disposés séquentiellement qui s'étendent en spirale autour dudit arbre (20) ;
pour mélanger deux phases liquides à contre-courant dans des procédés d'extraction liquide-liquide, **caractérisé en ce que** lesdits n éléments modulaires (l₁, l₂, ..., lₙ) sont des tubes à ailettes en spirale.
